# EUROPEAN PATENT SPECIFICATION

(11) **EP 2 178 712 B1**
(45) Date of publication and mention of the grant of the patent: **06.11.2013**
(21) Application number: 08785995.5
(22) Date of filing: 09.07.2008
(51) Int. Cl.: B60K 15/04

(54) **SYSTEM FOR FILLING A TANK**
SYSTEM ZUR TANKBEFÜLLUNG
SYSTÈME POUR REMPLIR UN RÉSERVOIR

(30) Priority: 11.07.2007 FR 0756423; 05.02.2008 FR 0850720
(43) Date of publication of application: 28.04.2010
(73) Proprietor: Inergy Automotive Systems Research (Société Anonyme), 1120 Bruxelles (BE)
(72) Inventor: RUNARVOT, Hervé, 53260 Entrammes (FR); MIDON, Jean-François, Laval 53000 (FR)
(74) Representative: de la Bigne, Guillaume Michel Marie
(86) International application number: PCT/EP2008/058885
(87) International publication number: WO 2009/007385

(56) References cited:
- EP-A- 1 319 545
- DE-A1- 3 641 274
- DE-A1- 10 339 612
- DE-A1-102005 053 793
- DE-U1-202005 012 256
- FR-A- 2 861 655
- GB-A- 2 431 634

## Description

The present invention relates to a safety system for a fill pipe of a tank, in particular a fuel tank. The invention especially relates to a safety system that makes it possible to avoid introducing an unsuitable pump nozzle into the fill pipe.

The fill pipes present in fuel tanks, in particular the tanks aboard motor vehicles, are sealed during normal use of the tank, when not being filled. Sealing is generally performed by means of a cap that is introduced into or over the upper part of the pipe while transmitting a rotational movement thereto in order to close the pipe in a liquid-tight and gas-tight manner.

The operations of removing the cap before filling the tank, of replacing this cap and of closing the pipe after filling are most of the time carried out manually by the user. When the tank filling is finished, it may sometimes be forgotten to replace the cap and this then gives rise to the loss of this cap and to the pipe remaining open to the atmosphere for an indeterminate time. During this period, loss of liquid fuel may occur and vapours escape into the surrounding atmosphere.

For the purpose of preventing loss of the cap and contamination of the atmosphere which results therefrom, sealing systems integrated into the fill pipe, often called "capless" systems, have been proposed, replacing the traditional cap.

Thus, for example, Application FR 2 861 655 in the name of the Applicant describes a pipe system with a chamber, arranged in which is a stopper that can be moved between an open position, in which the opening of the passage is aligned with the inlet and outlet openings of the chamber, and a closed position, in which the outlet opening is sealed. Such a pipe system has the advantage that the stopper is integrated into the pipe head and cannot be mislaid or forgotten. Moreover, an automatic opening and closing of the pipe head by introduction and withdrawal of a filling nozzle enables the task of the user to be made easier. This opening is made possible by axial pressure on an inlet valve connected to the stopper (which is in the form of a rotary slide valve) by a coupling member. Such a geometry favours automatic and leak-tight sealing without even using a seal.

Furthermore, for the purpose of preventing tanks from being filled with an unsuitable fuel that is capable of damaging the engine, foolproofing systems have been developed. To prevent a petrol tank from being filled with diesel, it is sufficient to provide an inlet opening with a small enough diameter, petrol pump nozzles having a standard nominal diameter of around 20.6 mm (described as small diameter in the present document) whereas diesel pump nozzles have a standard nominal diameter of 23.8 mm (described as large diameter in the present document). On the other hand, the reverse (preventing petrol from being introduced into a diesel tank) is more complicated and generally involves the use of devices that are expensive (such as contact sensors: for example, see Patent US 6 382 270) and/or complicated to manufacture and install (such as release arms provided with hooks: for example, see Patent US 6 302 169).

A simpler means of producing such a foolproofing effect consists in ensuring that the valve comprises a contact face having a geometry such that a small-diameter nozzle may be jammed on the contact face with the consequence that, in this case, complete swinging open of the inlet valve that allows the nozzle to be introduced into the pipe with its unobstructed filling end is not possible. The only way to unjam the end of the nozzle consists, in this case, in withdrawing it from the contact surface of the valve. On the other hand, when a large-diameter nozzle comes into contact with the contact face of the valve, this valve may be swung completely open under the effect of the force of introducing the nozzle and the nozzle may be introduced into the pipe with its free filling end that is not jammed on the contact face of the valve.

Such a system is described in Application DE 10 2005 053 793. However, the variants which are illustrated in the various figures of this application are bulky since they all involve a valve that has a large-sized cavity (and therefore that has a large-sized casing) so that the diameter of the pipe (or of the pipe head) is large in this area in order to enable them to be swung into the open position. In fact, this large-sized cavity ensures sure and effective blocking of a small-diameter nozzle inside it but, on the other hand, the increase in the diameter of the pipe which results therefrom greatly penalizes the bulkiness of the system.

In order to overcome this bulkiness, the Applicant had the idea of equipping the inner surface of the pipe (head) that is opposite the valve when the latter is in the swung (open) position, with a relief which:
juts out and blocks the swinging of the valve when a small-diameter nozzle interacts with it (which makes it possible to reduce the size of the cavity volume in the valve, and therefore the bulkiness of the system)

Therefore, the present invention relates to a system for filling a tank according to claim 1.

The term "freely" is understood to mean with its free filling end (through which the fuel is discharged by the service station pump).

The present invention may be applied to any type of tank intended to be filled using an "automatic" filling nozzle (that stops automatically at the end of filling). It gives good results with fuel tanks.

In the device according to the invention, the tank is composed of a scaled chamber, the shape of which is not important. The tank should normally be produced from a material that is leak-tight and chemically inert to the liquids for which it is intended, for example to the volatile liquid fuels derived from oil, used for motor vehicle propulsion. Examples of liquids that can be used in the tank to which the invention relates comprise fuels for supplying motor vehicle engines, in particular petrol and diesel, and organic liquids used as fuel or oxidant for supplying fuel cells intended to generate an electric current. Materials that can be used to produce the tank especially comprise metals (particularly steel) and plastics. Advantageously, polymers and copolymers derived from olefins, particularly ethylene, are used. Polyethylene, and in particular high-density polyethylene (HDPE), is especially recommended in the case of tanks intended for volatile liquid fuels derived from oil.

The wall of the tank may be composed of a single thermoplastic layer, or of two layers. One or more other possible additional layers may, advantageously, be composed of layers made of a barrier material to liquids and/or gases. Preferably, the nature and thickness of the barrier layer are chosen so as to minimize the permeability of liquids and gases in contact with the internal surface of the tank. Preferably, this layer is based on a barrier resin, that is to say a resin that is impermeable to the fuel such as, for example, EVOH (a partially hydrolysed ethylene/vinyl acetate copolymer). Alternatively, the tank may be subjected to a surface treatment (fluorination or sulphonation) for the purpose of making it impermeable to the fuel.

The tank according to the invention preferably comprises an EVOH-based barrier layer located between the HDPE-based outer layers.

The filling system according to the invention generally comprises a pipe head (mounted on the upper end of the fill pipe) that preferably comprises an inlet opening and an outlet opening. It moreover comprises a pivoting valve which may be mounted in/on the pipe head or in/on the fill pipe. The filling system according to the invention may also comprise a moveable stopper under the valve. This valve may have any shape. However, the valve generally has cross sections (through planes perpendicular to the axis of the pipe) that are substantially circular when it is mounted in/on the pipe head, given that the inlet and outlet openings of the head are generally circular, or, when it is mounted in/on the pipe, given that the pipe has a substantially circular cross section (through planes perpendicular to the axis of the pipe). It is generally a circular plate.

Preferably, the constituent materials for the pipe, head, valve and stopper are plastics. Polyamides (preferably reinforced, with glass or carbon fibres for example) and polyacetals (such as POM, or polyoxymethylene) give good results.

Preferably, by default (i.e. at rest, when no nozzle acts on the valve), the valve is kept in its closed position (i.e. pushed upwards) using a suitable device. A device which is particularly suitable for this purpose is a prestressed spring or a part that can be deformed within the limit of its elastic stresses. In particular, recourse to a prestressed spring is simple and particularly suitable.

Preferably, the contact face of the valve comprises a part that forms a depression, this depression comprising a lateral surface and a base, and being designed so as to jam therein the end of a small-diameter nozzle when this nozzle cooperates with the lateral surface of the depression.

More preferably, the lateral surface of the depression comprises a frustoconical cross section that has an axis substantially parallel to the axis for introduction of the nozzle when the inlet valve is in the closed position. The lateral surface is chosen so that when the nozzle is introduced into the depression, the lateral surface of the nozzle cooperates with the lateral surface of the depression and so that the introduction movement creates a blocking of the nozzle in the depression so as to limit the swinging/pivoting of the valve and to prevent the filling end of the nozzle from being freely introduced into the pipe.

More preferably still, the depression is off-centred relative to the contact face of the valve, i.e. the position of the depression on the contact face of the valve is optimized in order to cooperate more rapidly with the inlet opening of the pipe head and to improve the blocking of the nozzle in the depression. In fact, when the end of the nozzle is jammed in the depression, the nozzle is slanted relative to the filling axis and it rests against the edge of the opening, which prevents the valve from swinging right to the end. The only way to unjam the free end of the nozzle consists in withdrawing it from the depression and by doing so returning the valve to its closed position. The depression is off-centred so as to position it at the location where it is easiest to activate the main valve. If the hole was centred there would be enough space around the periphery of the valve (on the opposite side from the axis of rotation of the valve) to succeed in swinging/pivoting the valve with a petrol nozzle without this nozzle cooperating with the depression.

When the valve is not mounted at the inlet of the system but when the system comprises a head part or pipe part upstream of the valve (in the direction of introducing the nozzle), this upstream part is equipped with a deformable device, the purpose of which is to centre the small-diameter nozzles and to be deformed in order to allow large-diameter nozzles to pass through (also in a centred manner). This device may consist of a continuous part, generally of substantially annular shape and possibly equipped with slots. Alternatively, it may be separate (individual) parts, preferably distributed uniformly around a cross section of the head or pipe. The deformable nature of this device may itself be conferred by its thickness, its geometry and/or its constituent material. Clips or types of tabs that can be deformed are particularly suitable.

This variant is particularly advantageous in systems with a cap, where the foolproofing valve is not the main stopper but is preceded (upstream) by a conventional cap.

In what has gone before, the term "pivoting/swinging" is in fact understood to mean a rotational movement about an axle which hence is preferably located at one end (in the vicinity of a tangent to the circumference) of the valve. To allow such a movement, the valve is preferably provided with at least one recess through which the axle is inserted. This movement is preferably possible only towards the inside of the head or of the pipe depending on whether the valve is mounted on the head or on the pipe.

In the case where the valve is mounted in/on the pipe, the valve may be swung so that, when a large-diameter nozzle (of diesel type) is introduced into the pipe and when the free end of the nozzle comes into contact with the contact face of the valve, the valve may be retracted into a clearance provided either in the pipe, or on the surface or even outside this pipe so that the valve, when it is in the retracted position, does not constitute an obstacle to the introduction of the nozzle into the pipe. When a small-diameter nozzle (or petrol type) is introduced into the pipe, the end of the nozzle exerts a force against the contact face of the valve and is jammed on said contact face so that the nozzle cannot be freely introduced into the pipe.

As explained above, with a view to reducing the bulkiness of the system according to the invention, the inner surface of the pipe (head) which is opposite the valve when this is in the swung (open) position, comprises a relief which:
- either juts out and blocks the swinging of the valve when a small-diameter nozzle interacts with it;
- or is hollow and hides the valve when the latter is in a position swung open under the effect of a large-diameter nozzle.

As will emerge from what follows, the 1^{st} alternative is preferred in the case of "capless" systems and the 2^{nd} is preferred in the case of systems with a cap.

According to one particular embodiment where the valve is preferably mounted on the fill head and constitutes the main stopper of a "capless" system, the valve comprises a blocking pin capable of being activated by the introduction of a small-diameter nozzle. When such a nozzle comes into contact with the valve, the nozzle may act on the blocking pin so as to displace it and so that the pin cooperates with a fixed part (projecting relief) of the pipe head so as to block the valve in its closed position. In this way, a swinging/pivoting movement of the valve is not (or barely) possible and the small-diameter nozzle cannot (or can barely) be introduced into the pipe.

Preferably, the blocking pin consists of a part that can be rotated about an axis substantially parallel to the pivoting/swinging axle of the valve and that is firmly attached to said valve. Also preferably, the fixed part of the pipe head (projecting relief) consists of a single connected part against which the pin comes to rest when it is displaced by a small-diameter nozzle.

According to another particular embodiment where the valve is preferably mounted in the head or in the pipe and where the system comprises a separate cap, this head or pipe comprises either a relief that is hollow (when seen from inside the head or pipe, but that projects out when seen from the outside), or straightforwardly an opening through which the valve may at least partly swing. The variant according to which the head or pipe comprises an opening of suitable size and position so that said opening is sealed when the valve is in the open position is particularly suitable, in particular when the valve is mounted in the pipe, and in particular in filling systems with a conventional cap (see previously).

As mentioned above, in capless systems (with an automatic stopper), the system according to the invention may comprise a stopper under the inlet valve that can preferably be moved in a head as described previously. It may, for example, be a second pivoting valve sealing the outlet opening of the head, and the movement of which is either allowed or blocked depending on whether the inlet valve has or has not pivoted into its open position. In this variant, the inlet valve may, for example, act on an actuator that respectively allows the movement of the second pivoting valve to be (un)locked.

According to another variant, which is preferred, the stopper is a rotary slide valve such as described in the aforementioned Application FR 2 861 655 and of which the content is, for this purpose, incorporated by reference in the present application. In this variant, the inlet valve is connected to the slide valve by a coupling member so that a pressure exerted on the valve by a large-diameter filling nozzle causes the valve to swing in the fill head and the slide valve to rotate, placing a cylindrical opening of said slide valve in alignment with the inlet and outlet openings of the head.

In one particular embodiment of this variant, the coupling member comprises two engaged pinions, one of the pinions being firmly attached to the slide valve and the other pinion being firmly attached to the valve. In this embodiment, the rotation of the valve about its pivot automatically causes a corresponding rotation of the slide valve in the pipe head, via the two pinions. In that way, a pressure exerted on the valve with a large-diameter filling nozzle indeed causes the valve to swing in the head and the slide valve to rotate, placing a cylindrical opening of said slide valve in alignment with the inlet and outlet openings of the head.

In the device according to the invention, it is often advantageous to provide a locking mechanism which may be operated directly (in proximity to said mechanism) or from the passenger compartment of the vehicle, and which prevents access to the tank, for example by blocking the movement of the fuel filler flap or of the inlet valve in the case of capless systems with an automatic stopper. Blocking and unblocking of the flap or of the valve may be carried out manually or via an electric motor or an actuator (a kind of cylinder actuator) controlled electrically, electromagnetically or manually. It should be noted that, by definition, the fuel filler flap is a part of the bodywork which seals the filling bowl or unblocks the opening of the fill pipe or the fill head, where appropriate. This flap is generally aligned with the vehicle surface in the closed position, and in its open position it releases the fill opening (in the head or pipe) to make it possible to remove the cap therefrom (in conventional systems) or to make its automatic stopper swing (in "capless" systems).

This locking system may be combined with locking of the vehicle doors, for example. Such a system makes it possible to effectively tackle the theft-proofing of the system. Moreover, the opening, closing and locking functions brought together in one and the same part create a substantial cost saving and facilitate the assembly onto the vehicle.

Usually, on the vehicles, mainly for aesthetic reasons, a flap masks the fuel inlet circuit and has central locking. With the locking system according to the advantageous variant described above, the flap should no longer be provided with a locking function and may then be opened manually, which allows, for example, the bowl to be cleaned using a pressure washer.

The present invention also relates to a fuel tank equipped with a filling system as described above.

Other particular aspects and features of the invention will become apparent from the description of the appended drawings which show:
- Fig. 1: a top view of the upper part of a 1^{st} variant of a foolproofing system that does not conform to the invention in a completely closed position;
- Fig. 2: a cross-sectional view of the same part where the introduction of a small-diameter nozzle is blocked by an inlet valve;
- Fig. 3: a top view of this same upper part in the same position for a system according to a 2^{nd} variant of the invention;
- Fig. 4: a cross-sectional view of the same part where the introduction of a small-diameter nozzle is blocked by an inlet valve and a blocking pin;
- Figs. 5-7: 3 views of an inlet valve still of a system according to the 2^{nd} variant;
- Figs. 8-9: 2 cross-sectional views of a foolproofing system according to a 3^{rd} variant that conforms to the invention where the introduction of a large-diameter nozzle is allowed;
- Fig. 10: cross-sectional view of a system according to the 3^{rd} variant where the introduction of a small-diameter nozzle is blocked;
- Fig. 11: views from various angles (11a (oblique view) and c (front view)) and cross-sectional view (11b) of a foolproofing system according to a 4^{th} variant that conforms to the invention, either in the closed valve position (small-diameter nozzle): left-hand figures, or in the open valve position (large-diameter nozzle): right-hand figures; and
- Fig. 12: views from various angles (12a (oblique view) and c (front view)) and cross-sectional view (12b) of a foolproofing system according to a 5^{th} variant that conforms to the invention, either in the closed valve position (small-diameter nozzle): left-hand figures, or in the open valve position (large-diameter nozzle): right-hand figures.

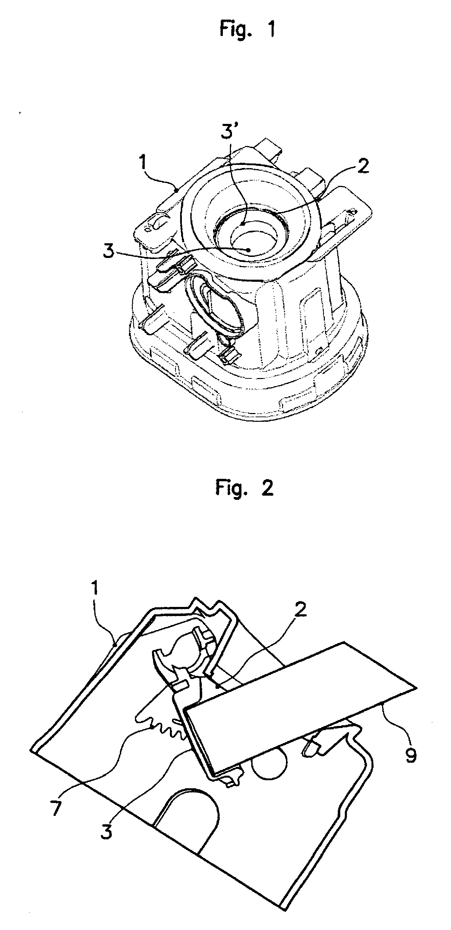

As regards the part of the system located underneath the parts illustrated in Figures 1 to 7, reference is made to Application FR 2 861 655, the content of which is, for this purpose, incorporated by reference in the present application.

In these figures, identical components bear identical numbers.

Seen in Figs. 1 to 7 is a valve (2) mounted on the upper part (1) of a fill pipe head. The valve (2) comprises a part that forms a depression (3) and is held in a closed position by a torsion spring that is not represented in the figures. The depression (3) comprises a lateral surface (3') and a base (3") and is sized so as to be able to jam therein a petrol pump nozzle (9) (of small-diameter type) in its base (3"). The lateral surface (3') comprises a frustoconical cross section that has an axis substantially parallel to the axis for introduction of the nozzle (9) and is capable of conforming to the profile of the free end of the small-diameter nozzle (9).

The peripheral part of the valve (2) is equipped with an excrescence (6) comprising cylindrical recesses (5) for a pivoting/swinging axle (not represented) attached to the upper part (1). It is also provided with a pair of pinions (7) complementary to a pair of pinions attached to a stopper of the rotary slide valve type, not represented in the figures.

In the 1^{st} variant, during the introduction of a petrol pump nozzle (9) into the fill pipe (as represented in Fig. 2), the free end of the nozzle (9) comes into contact with the base (3 ") of the depression (3) so that one part of the lateral surface of the nozzle (9) cooperates with the lateral surface (3'). When the nozzle (9) exerts a force on the base (3"), the valve (2) begins to swing to a position where the lateral surface (3') blocks the nozzle (9). An additional force exerted by the nozzle (9) on the valve (2) does not make it possible to move the valve (2) further as the nozzle (9) rests against the edge of the upper opening of the fill head so that the nozzle (9) cannot be introduced further into the pipe. In order to unjam the nozzle (9), it is necessary to withdraw it from the depression and therefore return the valve (2) to its closed position

With a diesel pump nozzle (9), the situation is different since the diameter of the nozzle (9) is such that it is not possible to introduce its free end into the depression (3) of the valve (2). When the nozzle (9) exerts a force on the valve (2), it forces the valve (2) to swing completely about the pivoting/swinging axle to an open position since, due to its larger diameter, the free end of the diesel pump nozzle is not received in the base (3") of the depression (3) but presses on the contact surface of the valve (2) without being jammed therein.

It should be noted, however, that in this variant either the lateral surface (3') is large and the system is robust and reliable but bulky, or this surface is more limited and the system is then less bulky, but less robust and reliable.

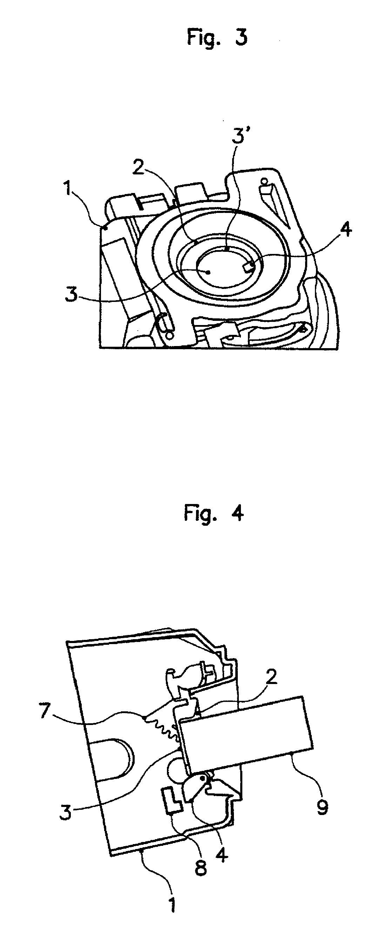

Figs. 3 to 7 correspond to a 2^{nd} variant of a foolproofing system that conforms to the invention, in which the valve (2) additionally comprises a blocking pin (4) capable of being moved by the free end of a small-diameter nozzle so as to block the valve (2) in its closed position.

Fig. 4 represents the situation where a petrol pump nozzle (9) has come into contact with the depression (3) so that the nozzle (9) displaces the blocking pin (4) which can be rotated about an axis substantially parallel to a rotational axis of the inlet valve (2). When it is displaced by the nozzle (9), the pin (4) cooperates with a housing in a fixed part (8) added to the pipe head so as to block the movement of the valve (2).

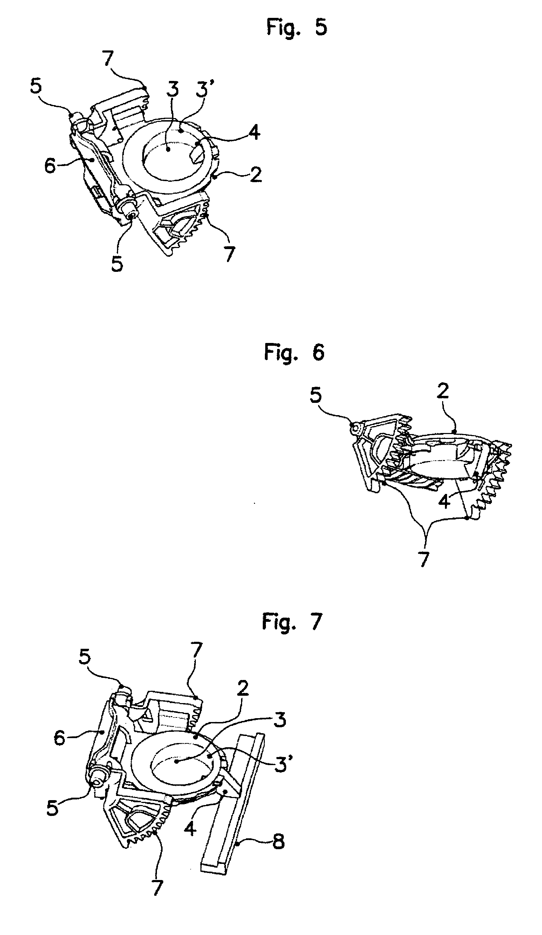

In Fig. 7, the valve (2) is in a blocking position where a small-diameter nozzle (not represented) has been introduced and where the pin (4) has been displaced so as to cooperate with a housing of the part (8). A nozzle with a diameter larger than the circumference of the depression (3) would not be able to penetrate into said depression and therefore would not be able to activate the pin. It would therefore make it possible to swing the valve (2) to its open position.

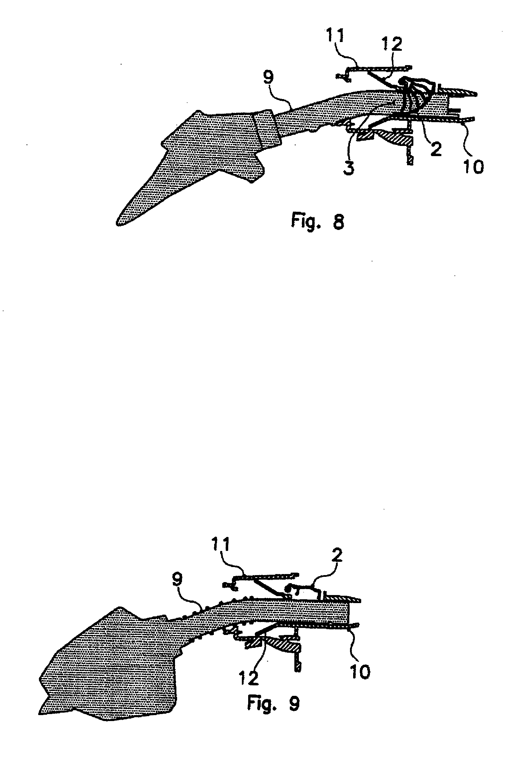

Unlike Figs. 1 to 7, which illustrate variants relating to "capless" systems where the foolproofing system is combined with a main stopper, Figs. 8 to 12 concern 3 variants relating to systems where the foolproofing valve is mounted in the pipe, onto which is mounted a pipe head (11) that is (intended to be) sealed by a cap (not represented).

Represented in Fig. 8 is a large-diameter nozzle (9) (of diesel type) introduced into a pipe (10) onto which is mounted a valve (2) capable of swinging about an axis substantially perpendicular to the axis of the pipe (10), under the effect of introducing the nozzle (9). The pipe (10) is equipped at one end with an introduction cone (12) which acts as a guide for the nozzle (9) when it is introduced into the pipe (10). The pipe (10) is additionally equipped with a pipe head (11). The various positions of the valve (2) illustrated in Fig. 8 correspond to the successive positions of the valve (2) during the introduction of the nozzle (9) into the pipe (10).

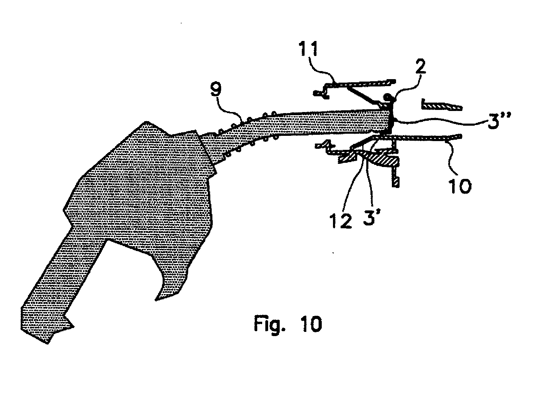

In Fig. 9, the valve (2) (of the same system as that from Fig. 8) occupies a free position in a space (opening) provided for this purpose in the pipe (10) after the nozzle (9) has been introduced into the pipe (10). In this position, the valve (2) seals said opening. Such a system is particularly compact and yet effective (see Fig. 10).

Fig. 10 represents the situation where (still according to the same variant) the free end of a small-diameter nozzle (9) (of petrol type) comes into contact with the base (3") of the depression (3) so that one part of the lateral surface of the nozzle (9) cooperates with the lateral surface (3'). When the nozzle (9) exerts a force on the base (3 "), the valve (2) begins to swing to a position where the lateral surface (3') blocks the nozzle (9). An additional force exerted by the nozzle (9) on the valve (2) does not make it possible to move the valve (2) further as one part of the lateral surface of the nozzle (9) that does not cooperate with the lateral surface (3') rests against the pipe (10) so that the nozzle (9) cannot be introduced further into the pipe. In order to unjam the nozzle (9), it is necessary to withdraw it from the depression (3) and therefore return the valve (2) to its closed position

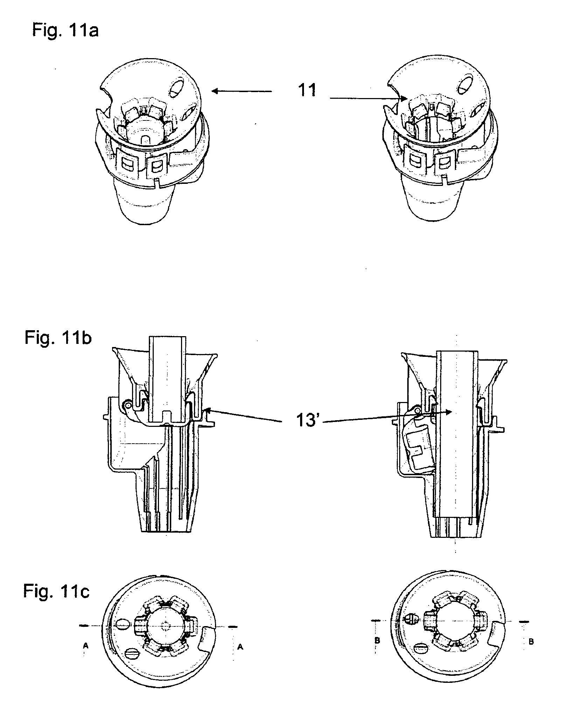

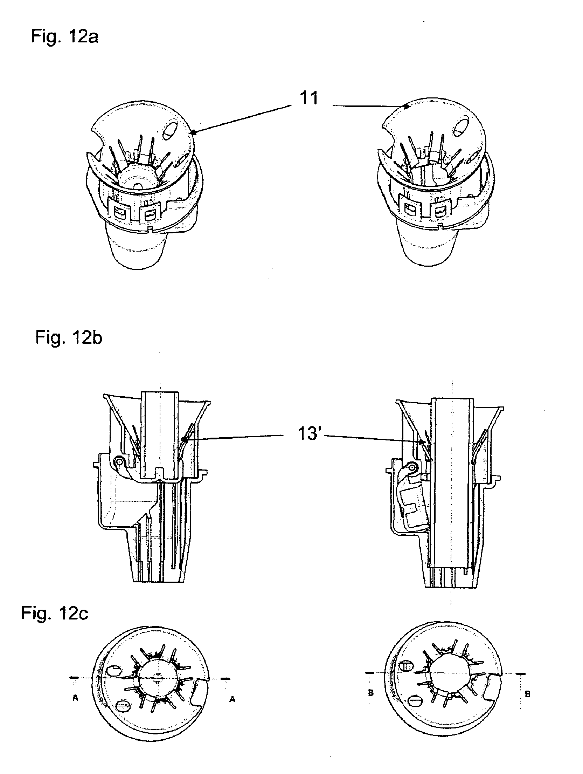

Figs. 11 and 12 represent two variants similar to that of Figs. 8 to 10, with, however, two fundamental differences:
- the space where the valve is retracted is this time a hollow relief in the pipe and not an opening in this pipe;
- the pipe head (11) comprises a deformable device (13), the purpose of which is to centre the small-diameter nozzles and to be deformed in order to allow large-diameter nozzles to pass through (also in a centred manner).

In Fig. 11, this relief consists of clips (13') and in Fig. 12, it consists of tabs (13") that form sorts of ramps.

These two systems (according to Figs. 11 and 12) are equally effective and equally overall limit the diameter of the top of the fill pipe.

## Claims

1. System for filling a tank comprising a fill pipe (10) optionally equipped with a pipe head (11), and an inlet valve (2) which may swing, about a swinging axle, between a closed position and an open position, the valve (2) possibly being swung into its open position by a force exerted by a free end of a large-diameter pump nozzle (9) against a contact face of the valve, and the contact face of the valve having a geometry such that when a small-diameter nozzle is used it gets jammed on said contact face and cannot be freely introduced into the pipe, wherein the contact face of the valve (2) comprises a part that forms a depression (3), the depression (3) comprising a lateral surface (3') and a base (3"), and being designed so as to jam therein the end of a small-diameter nozzle when this nozzle cooperates with the lateral surface (3') of the depression (3), wherein the valve (2) additionally comprises a blocking pin (4) and wherein the inner surface of the pipe or pipe head (11) which is opposite the valve when this is in the swung (open) position, comprises a relief (8) which juts out and blocks the swinging of the valve (2) when a small-diameter nozzle (9) interacts with it, the blocking pin (4) being capable of being moved by the free end of the nozzle (9) so as to block the valve (2) in its closed position via cooperation with the relief (8) in the pipe or pipe head (11).

2. System according to the preceding claim, **characterized in that** the valve (2) is kept, by default, in its closed position by a prestressed spring.

3. System according to any of the preceding claims, **characterized in that** the lateral surface (3') of the depression (3) comprises a frustoconical cross section that has an axis substantially parallel to the axis for introduction of the nozzle (9) when the inlet valve is in its closed position.

4. System according to any of the preceding claims, **characterized in that** the depression (3) is off-centred relative to the contact face of the valve (2).

5. System according to any one of the preceding claims, in which the system comprises a head part (11) or pipe part (12) upstream of the valve (2) and in which this upstream part is equipped with a deformable device (13) which makes it possible to centre the small-diameter nozzles and to be deformed in order to allow large-diameter nozzles to pass through (also in a centred manner).

6. System according to the preceding claim, where the deformable device consists of clips (13') or tabs (13").

7. System according to any one of Claims 1 to 4, **characterized in that** a pipe head is mounted on the upper end of the fill pipe and **in that** this head comprises an inlet opening sealed by the inlet valve (2), an outlet opening and a moveable stopper in the head under the valve (2).

8. System according to the preceding claim, in which the stopper is a rotary slide head connected to the valve (2) by a coupling member so that a pressure exerted on the valve (2) by a large-diameter fill nozzle causes the valve (2) to swing in the fill head and the slide valve to rotate, placing a cylindrical opening of said slide valve in alignment with the inlet and outlet openings of the head.

9. System according to the preceding claim, **characterized in that** the coupling member comprises two engaged pinions, one of the pinions (7) being firmly attached to the slide valve and the other pinion being firmly attached to the valve (2).

10. System according to any one of Claims 1 to 6 **characterized in that** a pipe head (11) is mounted on the upper end of the fill pipe (12) and **in that** the valve (2) is mounted in or on the fill pipe and may be retracted into a clearance provided in the pipe by a force exerted by the free end of the nozzle (9) against the contact face of the valve (2) when a large-diameter nozzle is used.

11. System according to the preceding claim, in which the pipe comprises an opening of suitable size and position so that said opening is sealed when the valve (2) is in the open position.

12. Fuel tank equipped with a system according to any one of the preceding claims.

## Patentansprüche

1. System zur Tankbefüllung, umfassend ein Füllrohr (10), das optional mit einem Rohrkopf (11) ausgerüstet ist, und ein Einlassventil (2), das um eine Schwenkachse zwischen einer geschlossenen Position und einer offenen Position geschwenkt werden kann, wobei das Ventil (2) möglicherweise durch eine Kraft in seine offene Position geschwenkt werden kann, die durch ein freies Ende einer Pumpendüse (9) mit großem Durchmesser auf eine Kontaktfläche des Ventils ausgeübt ist, und wobei die Kontaktfläche des Ventils eine derartige Geometrie aufweist, dass, wenn eine Düse mit kleinem Durchmesser benutzt ist, diese an der Kontaktfläche festklemmt und nicht frei in das Rohr eingeführt werden kann, wobei die Kontaktfläche des Ventils (2) ein Teil umfasst, das eine Vertiefung (3) ausbildet, wobei die Vertiefung (3) eine seitliche Fläche (3') und eine Basis (3") umfasst und zum Festklemmen eines Endes einer Düse mit kleinem Durchmesser darin gestaltet ist, wenn diese Düse mit der seitlichen Fläche (3') der Vertiefung (3) zusammenwirkt, wobei das Ventil (2) zusätzlich einen Sperrzapfen (4) umfasst, und wobei die Innenfläche des Rohrs oder Rohrkopfs, die dem Ventil gegenüberliegt, wenn dieses in der geschwenkten (offenen) Position ist, eine Rücknahme (8) umfasst, die vorspringt und das Schwenken des Ventils (2) sperrt, wenn eine Düse (9) mit kleinem Durchmesser damit in Wechselwirkung tritt, wobei der Sperrzapfen (4) imstande ist, durch das freie Ende der Düse (9) bewegt zu werden, um das Ventil (2) über Zusammenwirkung mit der Rücknahme (8) im Rohr oder Rohrkopf zu sperren.

2. System nach dem vorhergehenden Anspruch, **dadurch gekennzeichnet, dass** das Ventil (2) standardmäßig durch eine vorgespannte Feder geschlossen gehalten wird.

3. System nach einem der vorhergehenden Ansprüche, **dadurch gekennzeichnet, dass** die seitliche Fläche (3') der Vertiefung (3) einen kegelstumpfförmigen Querschnitt aufweist, der eine Achse aufweist, welche im Wesentlichen parallel zu der Achse zur Einführung der Düse (9) verläuft, wenn das Einlassventil in der geschlossenen Position ist.

4. System nach einem der vorhergehenden Ansprüche, **dadurch gekennzeichnet, dass** die Vertiefung (3) bezüglich der Kontaktfläche des Ventils (2) außermittig ist.

5. System nach einem der vorhergehenden Ansprüche, wobei das System ein Kopfteil (11) oder Rohrteil (12) umfasst, das dem Ventil (2) vorgeschaltet ist, und wobei das vorgeschaltete Teil mit einer verformbaren Vorrichtung (13) ausgerüstet ist, die es möglich macht, die Düsen mit kleinem Durchmesser zu zentrieren und verformt zu werden, um zu ermöglichen, dass Düsen mit großem Durchmesser (ebenfalls zentriert) durchlaufen.

6. System nach dem vorhergehenden Anspruch, wobei die verformbare Vorrichtung aus Clips (13') oder Zungen (13") bestehen.

7. System nach einem der Ansprüche 1 bis 4, **dadurch gekennzeichnet, dass** ein Rohrkopf am oberen Ende des Füllrohrs angebracht ist, und dass dieser Kopf eine Einlassöffnung, die durch das Einlassventil (2) abgedichtet ist, eine Auslassöffnung und einen beweglichen Anschlag im Kopf unter dem Ventil (2) umfasst.

8. System nach dem vorhergehenden Anspruch, wobei der Anschlag ein drehbarer Gleitkopf ist, der durch ein Kupplungsglied derart mit dem Ventil (2) verbunden ist, dass ein Druck, der durch eine Fülldüse mit großem Durchmesser auf das Ventil (2) ausgeübt ist, bewirkt, dass das Ventil (2) in dem Füllkopf schwenkt und das Gleitventil dreht, wodurch eine zylindrische Öffnung des Gleitventils an den Einlass- und Auslassöffnungen des Kopfs ausgerichtet angeordnet ist.

9. System nach dem vorhergehenden Anspruch, **dadurch gekennzeichnet, dass** das Kupplungsglied zwei in Eingriff gebrachte Ritzel umfasst, wobei eines der Ritzel (7) fest an dem Gleitventil angebracht ist und das andere Ritzel fest an dem Ventil (2) angebracht ist.

10. System nach einem der Ansprüche 1 bis 6, **dadurch gekennzeichnet, dass** ein Rohrkopf (11) am oberen Ende des Füllrohrs (12) angebracht ist, und dass das Ventil (2) in oder an dem Füllrohr angebracht ist und durch eine Kraft in einen Freiraum, der im Rohr vorgesehen ist, eingezogen werden kann, die durch das freie Ende der Düse (9) auf die Kontaktfläche des Ventils (2) ausgeübt ist, wenn eine Düse mit großem Durchmesser benutzt ist.

11. System nach dem vorhergehenden Anspruch, wobei das Rohr eine Öffnung mit derart geeigneter Größe und Position umfasst, dass die Öffnung abgedichtet ist, wenn das Ventil (2) in der offenen Position ist.

12. Kraftstofftank, ausgerüstet mit einem System gemäß einem der vorhergehenden Ansprüche.

## Revendications

1. Système destiné à remplir un réservoir, comportant un tuyau de remplissage (10) facultativement équipé d'une tête de tuyau (11), et d'un clapet d'entrée (2) qui peut pivoter, autour d'un axe de pivotement, entre une position fermée et une position ouverte, le clapet (2) étant éventuellement pivoté dans sa position ouverte par une force exercée par une extrémité libre d'un pistolet de distribution à grand diamètre (9) contre une face de contact du clapet, et la face de contact du clapet ayant une géométrie telle que lorsqu'un pistolet de petit diamètre est utilisé, il reste coincé sur ladite face de contact et ne peut pas être librement introduit dans le tuyau, dans lequel la face de contact du clapet (2) comporte une partie qui forme un creux (3), le creux (3) comportant une surface latérale (3') et une base (3"), et étant conçu de manière à coincer dans celui-ci l'extrémité d'un pistolet de petit diamètre lorsque ce pistolet coopère avec la surface latérale (3') du creux (3), dans lequel le clapet (2) comporte de plus une goupille de blocage (4) et dans lequel la surface intérieure du tuyau ou de la tête de tuyau (11) qui est opposée au clapet lorsqu'il est dans la position pivotée (ouverte), comporte un relief (8) qui fait saillie vers l'extérieur et bloque le pivotement du clapet (2) lorsqu'un pistolet de petit diamètre (9) interagit avec lui, la goupille de blocage (4) étant capable d'être déplacée par l'extrémité libre du pistolet (9) de manière à bloquer le clapet (2) dans sa position fermée par coopération avec le relief (8) dans le tuyau ou la tête de tuyau (11).

2. Système selon la revendication précédente, **caractérisé en ce que** le clapet (2) est maintenu, par défaut, dans sa position fermée par un ressort précontraint.

3. Système selon l'une quelconque des revendications précédentes, **caractérisé en ce que** la surface latérale (3') du creux (3) comporte une section transversale tronconique qui a un axe sensiblement parallèle à l'axe d'introduction du pistolet (9) lorsque le clapet d'entrée est dans sa position fermée.

4. Système selon l'une quelconque des revendications précédentes, **caractérisé en ce que** le creux (3) est excentré par rapport la face de contact du clapet (2).

5. Système selon l'une quelconque des revendications précédentes, dans lequel le système comporte une partie de tête (11) ou une partie de tuyau (12) en amont du clapet (2) et dans lequel cette partie amont est équipée d'un dispositif déformable (13) qui permet de centrer les pistolets de petit diamètre et d'être déformé afin de permettre aux pistolets de grand diamètre de passer à travers (également de manière centrée).

6. Système selon la revendication précédente, dans lequel le dispositif déformable est constitué de pinces (13') ou de languettes (13").

7. Système selon l'une quelconque des revendications 1 à 4, **caractérisé en ce qu'**une tête de tuyau est montée sur l'extrémité supérieure du tuyau de remplissage et **en ce que** cette tête comporte une ouverture d'entrée scellée par le clapet d'entrée (2), une ouverture de sortie et une butée mobile dans la tête sous le clapet (2).

8. Système selon la revendication précédente, dans lequel la butée est une tête d'articulation reliée au clapet (2) par un organe de couplage de sorte qu'une pression exercée par le clapet (2) par un pistolet de distribution de grand diamètre amène le clapet (2) à pivoter dans la tête de remplissage et l'articulation à tourner, en plaçant une ouverture cylindrique de ladite articulation en alignement avec les ouvertures d'entrée et de sortie de la tête.

9. Système selon la revendication précédente, **caractérisé en ce que** l'organe de couplage comporte deux pignons en prise, l'un des pignons (7) étant fermement fixé à l'articulation et l'autre pignon étant fermement fixé au clapet (2).

10. Système selon l'une quelconque des revendications 1 à 6, **caractérisé en ce qu'**une tête de tuyau (11) est montée sur l'extrémité supérieure du tuyau de remplissage (12) et **en ce que** le clapet (2) est monté dans ou sur le tuyau de remplissage et peut être rétracté dans un espace prévu dans le tuyau par une force exercée par l'extrémité libre du pistolet (9) contre la face de contact du clapet (2) lorsqu'un pistolet de grand diamètre est utilisé.

11. Système selon la revendication précédente, dans lequel le tuyau comporte une ouverture de taille et de position adaptées de sorte que ladite ouverture est scellée lorsque le clapet (2) est dans la position ouverte.

12. Réservoir de carburant équipé d'un système selon l'une quelconque des revendications précédentes.
